# EUROPEAN PATENT SPECIFICATION

(11) **EP 3 874 669 B1**
(45) Date of publication and mention of the grant of the patent: **16.08.2023**
(21) Application number: 19880843.8
(22) Date of filing: 28.10.2019
(51) Int. Cl.: H04L 5/00, H04W 72/12, H04B 7/022, H04B 7/024

(54) **UPLINK CONTROL INFORMATION (UCI) MULTIPLEXING FOR MULTI-TRANSMIT AND RECEIVE POINT (TRP) SYSTEM**
MULTIPLEXEN VON UPLINK-STEUERUNGSINFORMATIONEN (UCI) FÜR SYSTEM MIT MEHREREN SENDE- UND EMPFANGSPUNKTEN (TRP)
MULTIPLEXAGE D'INFORMATIONS DE COMMANDE DE LIAISON MONTANTE (UCI) POUR SYSTÈME À MULTIPLES POINTS DE TRANSMISSION ET DE RÉCEPTION (TRP)

(30) Priority: 01.11.2018 US 201862754361 P
(43) Date of publication of application: 08.09.2021
(73) Proprietor: INTEL Corporation, Santa Clara, CA 95054 (US)
(72) Inventor: XIONG, Gang, Portland, Oregon 97229 (US); ZHANG, Yushu, Heilongjiang 100190 (CN); WANG, Guotong, Heilongjiang 100084 (CN); MONDAL, Bishwarup, San Ramon, California 94583 (US)
(74) Representative: Goddar, Heinz J.
(86) International application number: PCT/US2019/058390
(87) International publication number: WO 2020/092264

(56) References cited:
- WO-A1-2013/089507
- WO-A1-2013/151323
- WO-A1-2013/168901
- US-A1- 2011 141 928
- US-A1- 2017 332 371
- HUAWEI ET AL: "Review Summary for Al 7.1.3.2 related to long PUCCH", 3GPP DRAFT; R1-1811970 REVIEW SUMMARY FOR AL 7.1.3.2 LONG PUCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chengdu, China; 20180908 - 20180912 10 October 2018 (2018-10-10), XP051519295, Retrieved from the Internet: URL:http://www.3gpp.org/ftp/tsg%5Fran/WG1% 5FRL1/TSGR1%5F94b/Docs/R1%2D1811970%2Ezip [retrieved on 2018-10-10]
- LENOVO ET AL: "Discussion of enhancements for multi-beam operation", 3GPP DRAFT; R1-1810572, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chengdu, China; 20181010 - 20181012 28 September 2018 (2018-09-28), XP051517979, Retrieved from the Internet: URL:http://www.3gpp.org/ftp/tsg%5Fran/WG1% 5FRL1/TSGR1%5F94b/Docs/R1%2D1810572%2Ezip [retrieved on 2018-09-28]

## Description

### BACKGROUND

Wireless systems typically include multiple User Equipment (UE) devices communicatively coupled to one or more Base Stations (BS). The one or more BSs may be Long Term Evolved (LTE) evolved NodeBs (eNB) or New Radio (NR) next generation NodeBs (gNB) that can be communicatively coupled to one or more UEs by a Third-Generation Partnership Project (3GPP) network.

Next generation wireless communication systems are expected to be a unified network/system that is targeted to meet vastly different and sometimes conflicting performance dimensions and services. New Radio Access Technology (RAT) is expected to support a broad range of use cases including Enhanced Mobile Broadband (eMBB), Massive Machine Type Communication (mMTC), Mission Critical Machine Type Communication (uMTC), and similar service types operating in frequency ranges up to 100 GHz.

3GPP Tdoc. R1-1811970, "Review summary for AI 7.1.3.2 related to long PUCCH", 3GPP TSG RAN WG1 Meeting #94bis, September 2018 relates to a summary of necessary connections and missing agreements, like e.g. correction on UCI on CSI resource and correction on PUCCH selection rule with no overlapping time within one slot etc., and a summary of essential issues like e.g. multi-slot PUCCH overlapping with single slot PUCCH and HARQ-ACK/CSI overlapping with more than one positive SR

3GPP Tdoc. R1-1810572, "Discussion of enhancements for multi-beam operation", 3GPP TSG RAN WG1 Meeting #94b, October 2018 discusses beam management and beam failure recovery issues for multi-TRP/multi-panel MIMO enhancement in R16.

### SUMMARY

The present invention is defined by the independent claims. Advantageous embodiments are described by the dependent claims.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a block diagram of a Third-Generation Partnership Project (3GPP) New Radio (NR) Release 15 frame structure in accordance with an example;
FIG. 2 illustrates a multi-transmit and receive point (TRP) transmission scheme in accordance with an example;
FIG. 3 illustrates overlapping uplink control information (UCI) for different TRPs in accordance with an example;
FIG. 4 illustrates a coordination pattern for uplink between a first TRP (TRP1) and a second TRP (TRP2) in accordance with an example;
FIG. 5 illustrates UCI multiplexing for a multi-TRP operation in accordance with an example;
FIG. 6 illustrates UCI multiplexing for a multi-TRP operation in accordance with an example;
FIG. 7 illustrates a bit order for a joint UCI report in accordance with an example;
FIG. 8 illustrates a bit order for a joint UCI report in accordance with an example;
FIG. 9 illustrates Abstract Syntax Notation (ASN) code of a channel state information (CSI) report configuration information element (IE) in accordance with an example;
FIG. 10 depicts functionality of a user equipment (UE) operable to encode uplink control information (UCI) for transmission to a Next Generation NodeB (gNB) in accordance with an embodiment;
FIG. 11 depicts functionality of a Next Generation NodeB (gNB) operable to decode uplink control information (UCI) received from a user equipment (UE) in accordance with an example;
FIG. 12 depicts a flowchart of a machine readable storage medium having instructions embodied thereon for encoding uplink control information (UCI) for transmission from a user equipment (UE) to a Next Generation NodeB (gNB) in accordance with an embodiment;
FIG. 13 illustrates an architecture of a wireless network in accordance with an example;
FIG. 14 illustrates a diagram of a wireless device (e.g., UE) in accordance with an example;
FIG. 15 illustrates interfaces of baseband circuitry in accordance with an example; and
FIG. 16 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

### DEFINITIONS

As used herein, the term "User Equipment (UE)" refers to a computing device capable of wireless digital communication such as a smart phone, a tablet computing device, a laptop computer, a multimedia device such as an iPod Touch^{®}, or other type computing device that provides text or voice communication. The term "User Equipment (UE)" may also be referred to as a "mobile device," "wireless device," of "wireless mobile device."

As used herein, the term "Base Station (BS)" includes "Base Transceiver Stations (BTS)," "NodeBs," "evolved NodeBs (eNodeB or eNB)," "New Radio Base Stations (NR BS) and/or "next generation NodeBs (gNodeB or gNB)," and refers to a device or configured node of a mobile phone network that communicates wirelessly with UEs.

As used herein, the term "cellular telephone network," "4G cellular," "Long Term Evolved (LTE)," "5G cellular" and/or "New Radio (NR)" refers to wireless broadband technology developed by the Third Generation Partnership Project (3GPP).

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

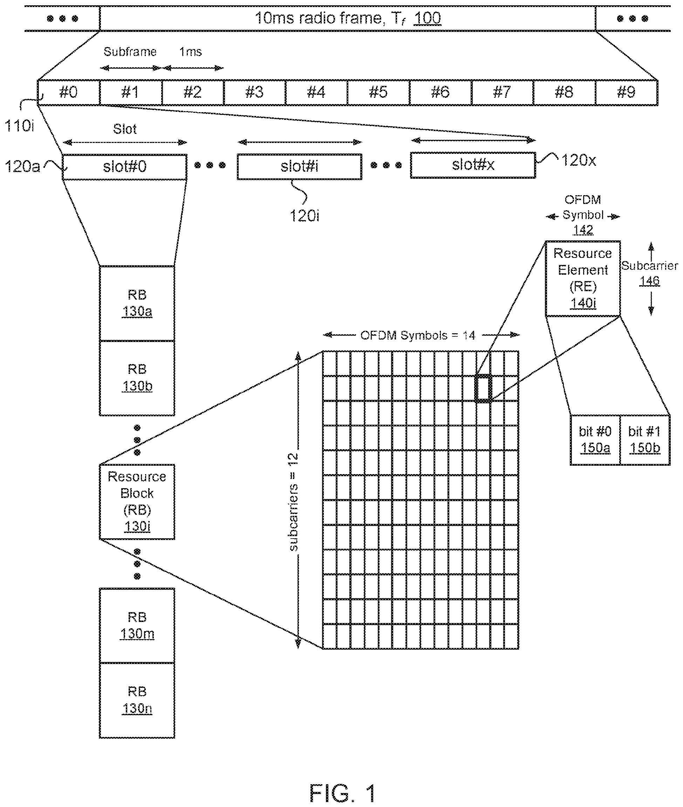

FIG. 1 provides an example of a 3GPP NR Release 15 frame structure. In particular, FIG. 1 illustrates a downlink radio frame structure. In the example, a radio frame 100 of a signal used to transmit the data can be configured to have a duration, T*_{f}*, of 10 milliseconds (ms). Each radio frame can be segmented or divided into ten subframes 110i that are each 1 ms long. Each subframe can be further subdivided into one or multiple slots 120a, 120i, and 120x, each with a duration, T*ₛₗₒₜ*, of 1 / µ ms, where µ = 1 for 15kHz subcarrier spacing, µ = 2 for 30kHz, µ = 4 for 60kHz, µ = 8 for 120kHz, and u = 16 for 240kHz. Each slot can include a physical downlink control channel (PDCCH) and/or a physical downlink shared channel (PDSCH).

Each slot for a component carrier (CC) used by the node and the wireless device can include multiple resource blocks (RBs) 130a, 130b, 130i, 130m, and 130n based on the CC frequency bandwidth. The CC can have a carrier frequency having a bandwidth. Each slot of the CC can include downlink control information (DCI) found in the PDCCH. The PDCCH is transmitted in control channel resource set (CORESET) which can include one, two or three Orthogonal Frequency Division Multiplexing (OFDM) symbols and multiple RBs.

Each RB (physical RB or PRB) can include 12 subcarriers (on the frequency axis) and 14 orthogonal frequency-division multiplexing (OFDM) symbols (on the time axis) per slot. The RB can use 14 OFDM symbols if a short or normal cyclic prefix is employed. The RB can use 12 OFDM symbols if an extended cyclic prefix is used. The resource block can be mapped to 168 resource elements (REs) using short or normal cyclic prefixing, or the resource block can be mapped to 144 REs (not shown) using extended cyclic prefixing. The RE can be a unit of one OFDM symbol 142 by one subcarrier (i.e., 15 kHz, 30kHz, 60kHz, 120kHz, and 240kHz) 146.

Each RE 140i can transmit two bits 150a and 150b of information in the case of quadrature phase-shift keying (QPSK) modulation. Other types of modulation may be used, such as 16 quadrature amplitude modulation (QAM) or 64 QAM to transmit a greater number of bits in each RE, or bi-phase shift keying (BPSK) modulation to transmit a lesser number of bits (a single bit) in each RE. The RB can be configured for a downlink transmission from the eNodeB to the UE, or the RB can be configured for an uplink transmission from the UE to the eNodeB.

This example of the 3GPP NR Release 15 frame structure provides examples of the way in which data is transmitted, or the transmission mode. The example is not intended to be limiting. Many of the Release 15 features will evolve and change in the 5G frame structures included in 3GPP LTE Release 15, MulteFire Release 1.1, and beyond. In such a system, the design constraint can be on co-existence with multiple 5G numerologies in the same carrier due to the coexistence of different network services, such as eMBB (enhanced Mobile Broadband), mMTC (massive Machine Type Communications or massive IoT) and URLLC (Ultra Reliable Low Latency Communications or Critical Communications). The carrier in a 5G system can be above or below 6GHz. In one example, each network service can have a different numerology.

Mobile communication has evolved significantly from early voice systems to today's highly sophisticated integrated communication platform. The next generation wireless communication system, 5G, or new radio (NR) will provide access to information and sharing of data by various users and applications. NR is expected to be a unified network/system that target to meet different and sometimes conflicting performance dimensions and services. Such diverse multi-dimensional specifications are driven by different services and applications. In general, NR will evolve based on 3GPP LTE-Advanced with additional potential new Radio Access Technologies (RATs) to enrich people's lives with improved wireless connectivity solutions. NR is expected to enable connectivity by wireless and deliver fast, rich contents and services.

For the 5G system, high frequency band communication has attracted significantly attention from the industry, since the high frequency band can provide wider bandwidth to support the future integrated communication system. The beam forming is a critical technology for the implementation of a high frequency band system since the beam forming gain can compensate for severe path loss caused by atmospheric attenuation, improve a signal to noise ratio (SNR), and enlarge a coverage area. By aligning a transmission beam to a target UE, radiated energy can be focused for higher energy efficiency, and mutual UE interference can be suppressed.

When a UE is equipped with two or multiple sub-arrays or panels, the UE can transmit or receive the control and data channel using two or multiple panels simultaneously to improve a link budget.

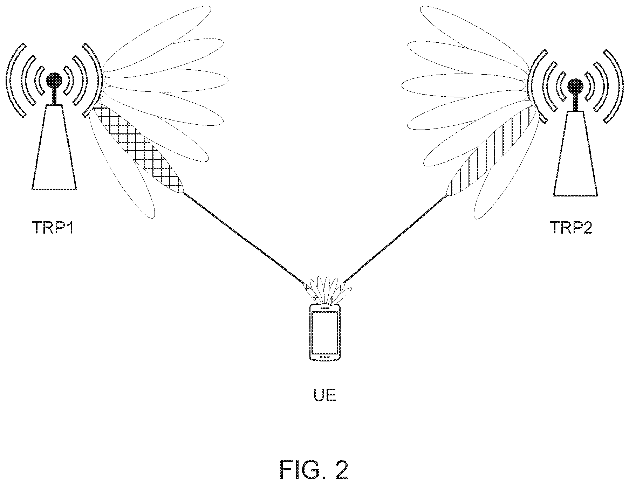

FIG. 2 illustrates an example of a multi-transmit and receive point (TRP) transmission scheme. For example, a UE can form two transmit (Tx) or receive (Rx) beams at a same time for the transmission or reception of physical channels and/or signals. The UE can communicate simultaneously with a first TRP (TRP1) and a second TRP (TRP2).

In one example, in NR, uplink control information (UCI) can be carried by a physical uplink control channel (PUCCH) or a physical uplink shared channel (PUSCH). In particular, the UCI can include a scheduling request (SR), hybrid automatic repeat request - acknowledgement (HARQ-ACK) feedback, channel state information (CSI) report, e.g., channel quality indicator (CQI), pre-coding matrix indicator (PMI), CSI resource indicator (CRI) and rank indicator (RI) and/or beam related information (e.g., L1-RSRP (layer 1- reference signal received power)).

For a multi-TRP operation, in case of no or loose scheduling coordination between TRPs, UCI on the PUCCH or PUSCH which is configured or indicated from different TRPs can partially or fully overlap in time in a slot. In this case, the UE may be unable to multiplex UCI for different TRPs in a single PUCCH or PUSCH transmission since one TRP may not know the configuration or payload size of UCI for another TRP. Further, if the UE does not support simultaneous transmission of multiple overlapping UCIs in a slot, the UE may only transmit one UCI for a given time.

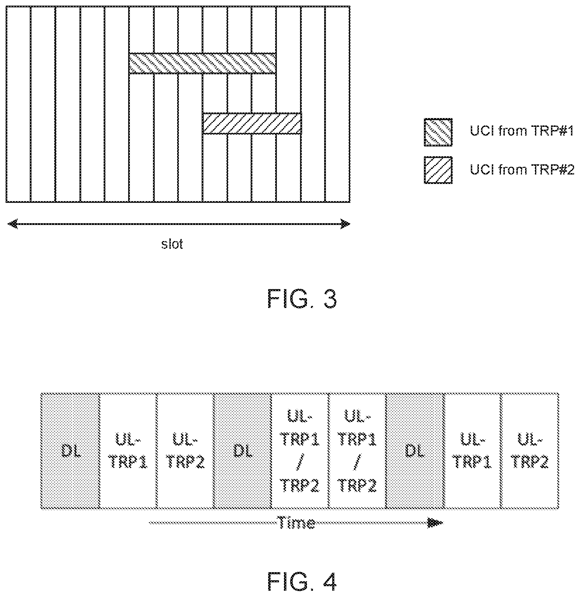

FIG. 3 illustrates an example of overlapping UCI for different TRPs. In this example, a UCI from TRP1 can overlap with a UCI from TRP2. When there is no or loose coordination from different TRPs, UCIs for different TRPs can overlap in time for a given UE. In this case, certain dropping or priority rules can be defined to allow the UE to only transmit one UCI in a slot.

In the present technology, a UCI multiplexing enhancement for multi-TRP operation is described herein. For example, the techniques described herein can address UCI multiplexing for multi-TRP operation with no or loose coordination. Further, the techniques described herein can involve a joint UCI report for multiple TRPs, as well as an indication of a TRP index.

In one example, in certain cases of multi-TRP operation, simultaneous transmission of overlapping UCIs is not considered. For example, TRP1 and TRP2 can be the serving cells on a same component carrier (CC) for a UE, and UCI1 and UCI2 can be requested (uplink resource assigned) by TRP1 and TRP2 from the UE. If the scheduling from TRP1 and TRP2 are tightly coordinated to be multiplexed in a time division multiplexing (TDM) manner, then simultaneous transmission of UCI1 and UCI2 can be avoided by network implementation.

However, this may not be always possible due to several reasons. For example, TRP1 and TRP2 scheduling may not be tightly coordinated because they can belong to separate base-band units (BBUs). In this case the L1, L2 layers at TRP1 and TRP2 may have no dynamic coordination. A negotiation of UE capabilities (e.g., multiple-input multiple-output (MIMO) layers, blind-decoding and control channel element (CCE) estimation capacity, etc.) can take place between TRP 1 and TRP2 to enable multi-TRP operation. In this case, TRP1 and TRP2 can behave similar to a tightly synchronized dual-connectivity scenario. Separate configuration of UCI/PUSCH/PUCCH using radio resource control (RRC) signalling can be performed in a per-cell manner.

FIG. 4 illustrates an example of a coordination pattern for uplink between a first TRP (TRP1) and a second TRP (TRP2). TRP1 and TRP2 can establish a framework of coordination based on the coordination pattern. Some OFDM symbols can be exclusively reserved for TRP1 use or TRP2 use while some OFDM symbols can be used by both TRP1 and TRP2. This coordination can be static or semi-static and can be established between TRP1 and TRP2 in a transparent manner to L1 specifications. Exclusive reservation for TRP1 or TRP2 can provide guaranteed uplink access, but can be inefficient due to the dynamic nature of uplink scheduling. Thus, it can be favorable to allow usage of some resources by both TRP1 and TRP2 in order to provision some resources for uplink access that provides a more efficient utilization of resources while accepting a certain probability of resource contention between TRP1 and TRP2.

In one example, certain corner cases can occur where tight scheduling coordination between TRP1 and TRP2 is not feasible. Such cases can include where a coordination pattern is being established or being changed. Such cases can also include where a gNB scheduling is not according to UE expectation.

Further, a TRP1 can be operating on a different sub-carrier spacing compared to a TRP2. In this case if a UE is not capable of supporting simultaneous transmission on multiple sub-carrier spacings, then UCI1 and UCI2 cannot be multiplexed in a frequency division multiplexing (FDM) manner.

### UCI Multiplexing For Multi-TRP Operation With No Or Loose Coordination

For multi-TRP operation, in case of no or loose scheduling coordination between TRPs, UCI on PUCCH or PUSCH which is configured or indicated from different TRPs can partially or fully overlap in time in a slot. In this case, a UE may be unable to multiplex UCI for different TRPs in a single PUCCH or PUSCH transmission since one TRP may not know the configuration or payload size of UCI for another TRP. Further, if the UE does not support simultaneous transmission of multiple overlapping UCIs in a slot, the UE may only transmit one UCI for a given time. The UCI can overlap fully or partially on one OFDM symbol. Multiple UCI associated with different sub-carrier spacings can overlap fully or partially. In this case, certain dropping or priority rules can be defined to allow the UE to only transmit one UCI in a slot.

In one example, with respect to enhancements on UCI multiplexing for multi-TRP operation, within a PUCCH group, when PUCCH resource(s) for a first TRP overlap PUCCH resource(s) for a second TRP in a slot, and a timeline specification is satisfied (as defined in TS 38.213 Section 9.2.5), the UE can first multiplex the UCI on PUCCH for the first and second TRP, respectively. After UCI multiplexing for each TRP, if resulting PUCCH resources for the first and second TRP overlap fully or partially, the UE can only transmit the PUCCH for the first TRP carrying UCI with the highest priority and drop the PUCCH for the second TRP. In this case, UCI associated with first TRP can be prioritized over UCI associated with the second TRP. Otherwise, if the resulting PUCCH resources for the first and second TRP do not overlap, the UE can transmit the PUCCHs for the first and second TRP, respectively.

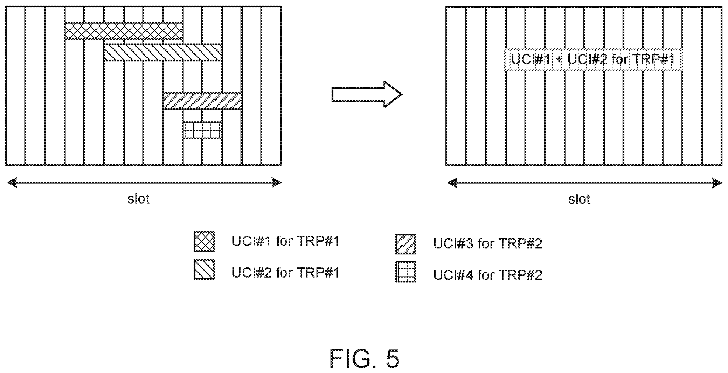

FIG. 5 illustrates an example of UCI multiplexing for a multi-TRP operation. For example, a group of overlapping PUCCH resources can include UCIs for TRP#1 and TRP#2. Further, UCI#1 from TRP#1 can have a highest priority among other UCIs in the group of overlapping PUCCH resources. In this example, based on the aforementioned technique. UCIs for the TRP#1 can be first multiplexed in a PUCCH resource. Further, if multiplexed UCIs for TRP#1 and TRP#2 are overlapping, UCI#1 and UCI#2 for the TRP#1 can be transmitted and UCIs for the TRP#2 can be dropped.

In one example, within a PUCCH group, when PUCCH resource(s) for a first TRP overlap PUCCH resource(s) for a second TRP in a slot, and the timeline specification is satisfied, the UE can only transmit one PUCCH carrying UCI with the highest priority among all PUCCH resources, and can drop other PUCCHs.

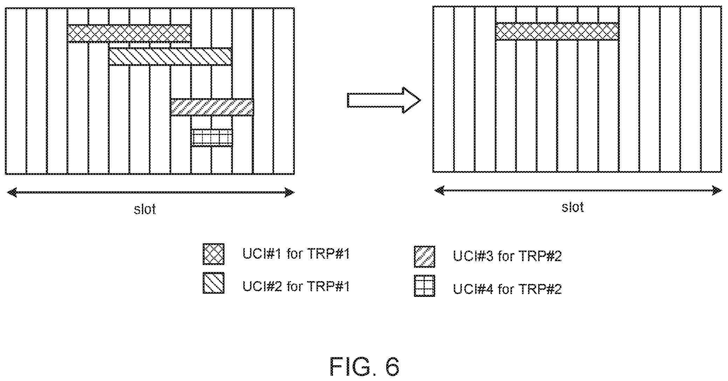

FIG. 6 illustrates an example of UCI multiplexing for a multi-TRP operation. In this example, a group of overlapping PUCCH resources can include UCIs for TRP#1 and TRP#2. Further, UCI#1 from TRP#1 can have the highest priority among other UCIs in the group of overlapping PUCCH resources. In this example, based on the aforementioned technique, only UCI#1 for the TRP#1 can be transmitted and other UCIs can be dropped.

In one example, a priority rule for the aforementioned techniques can be defined as follows: HARQ-ACK feedback can have a higher priority than SR, which can have a higher priority than CSI with higher priority, which can have a higher priority than CSI with lower priority (i.e., HARQ-ACK feedback > SR > CSI with higher priority > CSI with lower priority). Further, when a priority order of UCIs for different TRPs is the same, the UCI for a TRP with a lowest index can be transmitted and other UCIs can be dropped.

In one example, if a PUCCH resource for a first TRP carrying a HARQ-ACK overlaps with a PUCCH resource for a second TRP carrying a SR, the PUCCH for the first TRP can be transmitted and the PUCCH for the second TRP can be dropped. In another example, if a PUCCH resource for a first TRP carrying a HARQ-ACK overlaps with a PUCCH resource for a second TRP carrying a HARQ-ACK, the PUCCH for the first TRP can be transmitted and the PUCCH for the second TRP can be dropped. Alternatively, feedback for UCI to different TRP can be associated with different report configuration IDs (reportConfigId), where a higher reportConfigId can be associated with a higher priority.

In one example, the aforementioned techniques can be applied for the case when a PUSCH carrying UCI for a first TRP overlaps with a PUCCH carrying UCI for a second TRP, or the case when a PUSCH carrying UCI for a first TRP overlaps with a PUSCH carrying UCI for a second TRP. In particular, a physical channel carrying UCI with a highest priority and/or a lowest TRP index can be transmitted and other physical channels can be dropped.

### Joint UCI Report For Multiple TRPs

For multi-TRP operation, in case of tight coordination between TRPs, UCI on a PUCCH or PUSCH which can be configured or indicated from different TRPs can be combined and jointly transmitted on one PUCCH or PUSCH to one or more TRPs. A bit order for a joint UCI report can be defined to ensure alignment between the gNB and UE.

For example, techniques of bit ordering for a joint UCI report for multiple TRPs are described. The joint UCI report can be the report from a multiple CSI report configuration. A UE can report its capability of a maximum number of CSI report configuration that can be transmitted in a single UCI report.

In one example, a bit order of the joint UCI report can be UCI for the first TRP, UCI for the second TRP, etc. Within the UCI for one TRP, the bit order can follow the existing 3GPP TS, i.e., HARQ-ACK, SR(if any), CSI part 1 and CSI part 2 (if any).

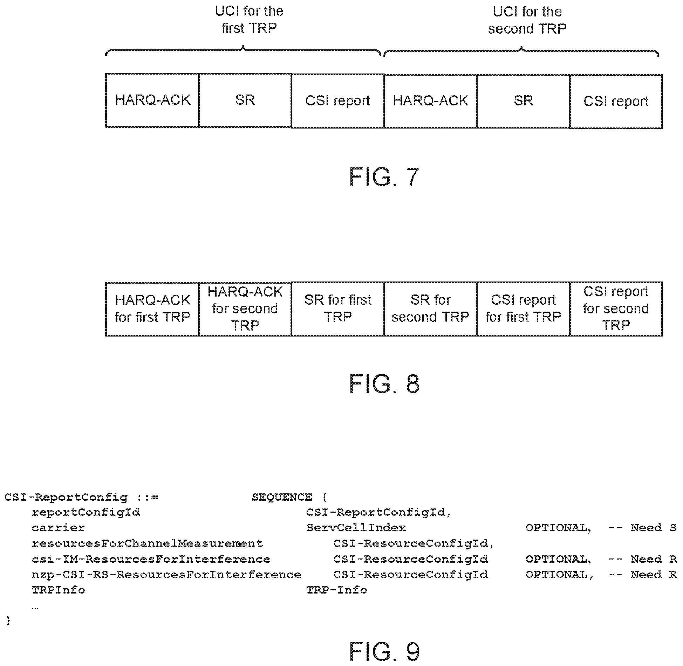

FIG. 7 illustrates an example of a bit order for a joint UCI report. In this example, the joint UCI report can be for two TRPs. The bit order of the joint UCI report can follow a UCI report for the first TRP and then a UCI report for the second TRP. In particular, the UCI for the first TRP can include a HARQ-ACK, SR and CSI report, and then the UCI for the second report can include a HARQ-ACK, SR and CSI report.

In one example, the bit order of the joint UCI report can be a HARQ-ACK for a first TRP, a HARQ-ACK for a second TRP, and a HARQ-ACK for an Nth TRP, wherein N is a positive integer. Then the bit order of the joint UCI report can include an SR for the first TRP (if any), an SR for the second TRP (if any), and an SR the Nth TRP (if any). Then the bit order of the joint UCI report can include a CSI report for the first TRP (if any), a CSI report for the second TRP (if any), and a CSI report for the Nth TRP(if any).

FIG. 8 illustrates an example of a bit order for a joint UCI report. In this example, the joint UCI report can include a HARQ-ACK for a first TRP, a HARQ-ACK for a second TRP, an SR for the first TRP, an SR for the second TRP, a CSI report for the first TRP, and a CSI report for the second TRP.

### Indication of TRP index

In one example, when reporting the joint UCI on either a PUCCH or a PUSCH, a TRP index can be aligned between a gNB and a UE, so as to allow the gNB to correctly decode the UCI information for different TRPs.

In one example, the TRP index can be explicitly indicated to the UE. In particular, the TRP index can be configured by higher layers via NR minimum system information (MSI), NR remaining minimum system information (RMSI), NR other system information (OSI) or radio resource control (RRC) signaling, or indicated in a medium access control - control element (MAC-CE) or dynamically indicated in the downlink control information (DCI).

In one example, the TRP index can be implicitly derived from other parameters, e.g., Radio Network Temporary Identifier (RNTI) or physical cell ID (physCellId as defined in TS 38.331) or serving cell (servCellIndex as configured by SpCellConfig). As an example, similar to carrier aggregation (CA) or dual connectivity, a UE can be configured with a set of L1 parameters associated with a serving cell. Each configured serving cell is one-to-one mapped to a TRP index based on a certain rule for, as an example, the serving cell associated with an initial access is the primary cell or TRP index-0. After a RRC connection establishment procedure is successful, each additionally configured serving cell can be associated with an indicated TRP index from the network. For example, for each TRP, a SpCellConfig message including a ServingCellConfig IE (as in 38.331) can be used to configure (add or modify) the UE with a serving cell, which can be the SpCell or an SCell of a master cell group (MCG) or a secondary cell group (SCG). The parameters herein can be UE specific and cell specific (e.g., in additionally configured bandwidth parts). The parameters can include a physical cell id, power control parameters, timing advance parameters (TA). Further, L 1 RRC configurations related to UCI for example CSI-ResourceConfig, CSI-ReportConfig, CSI-MeasConfig, PUCCH-Config, PUSCH-Config are naturally associated with a TRP through the ServingCellConfig/ servCellIndex.

In one example, the TRP index can be implicitly derived from other parameters, e.g., virtual cell id (VCID) that is indicated by the network. In this case, different VCIDs can be associated with the same serving cell or the same physical cell id. In another example, the TRP index can be derived in accordance with an ascending or descending order of cell RNTI (C-RNTI), or virtual cell ID. In yet another example, for a two-TRP operation, TRP index #0 can be the TRP with a lower C-RNTI, and TRP index #1 can be the TRP with a larger C-RNTI. Further, in each CSI report configuration, a cell ID or virtual cell ID or C-RNTI can be configured.

FIG. 9 illustrates an example of Abstract Syntax Notation (ASN) code of a channel state information (CSI) report configuration information element (IE). In the CSI report configuration is as follows, a TRPInfo parameter can indicate a cell ID or virtual cell ID or C-RNTI or explicit TRP index.

In one example, for HARQ-ACK feedback, a TRP index can be associated with each PUCCH resource, PUCCH resource set, or PUCCH-Config. In another example, to enable dynamic HARQ-ACK feedback on different TRPs, when a PUCCH resource is associated with a TRP index, when the PUCCH resource is selected for carrying a HARQ-ACK (in accordance with the procedure defined in Section 9.2.3 in TS38.213), the UE can determine the corresponding TRP for the PUCCH transmission based on a determined PUCCH resource and association with the TRP.

Alternatively, in another option, when the UE is configured with a TRP specific PUCCH-Config, one field in the DCI, e.g., DCI format 0_0 or 0_1 can be used to indicate which TRP is targeted for PUCCH transmission carrying HARQ-ACK feedback. In this case, the UE can determine the targeted TRP based on the indication in the DCI and can subsequently determine the PUCCH resource in accordance with the PUCCH-Config from the determined TRP. Similarly, for a SR transmission, a TRP index can be associated with each PUCCH resource, or SchedulingRequestConfig or SchedulingRequestResourceConfig.

In one configuration, a technique for wireless communication in a fifth generation (5G) or new radio (NR) system is described. A gNodeB (gNB) can indicate a transmit and receive point (TRP) index explicitly or implicitly. A UE can apply a priority based dropping rule to transmit only one physical uplink channel when more than one physical uplink channel from different TRPs overlap in time in a slot.

In one example, within a physical uplink control channel (PUCCH) group, when PUCCH resource(s) for a first TRP overlap with PUCCH resource(s) for a second TRP in a slot, and a timeline specification is satisfied, the UE can first multiplex the UCI on a PUCCH for a first and second TRP, respectively. If the resulting PUCCH resources for the first and second TRP overlap, the UE may only transmit a PUCCH for the first TRP carrying UCI with a highest priority and drop a PUCCH for the second TRP. Otherwise, if the resulting PUCCH resources for the first and second TRP do not overlap, the UE can transmit the PUCCHs for the first and second TRP, respectively.

In one example, within a PUCCH group, when PUCCH resource(s) for a first TRP overlap PUCCH resource(s) for a second TRP in a slot, if a timeline specification is satisfied, the UE can only transmit one PUCCH carrying UCI with a highest priority among all PUCCH resources, and can drop other PUCCHs. In another example, the priority rule can be defined as follows: HARQ-ACK feedback can have a higher priority than a SR, which can have a higher priority than a CSI with higher priority, which can have a higher priority than a CSI with lower priority. In yet another example, when a priority order of UCIs for different TRPs is the same, UCI for a TRP with a lowest index can be transmitted and other UCIs can be dropped. In a further example, the aforementioned techniques can be applied when a PUSCH carrying UCI for a first TRP overlaps with a PUCCH carrying UCI for a second TRP, or when a PUSCH carrying UCI for a first TRP overlaps with a PUSCH carrying UCI for a second TRP.

In one example, a bit order of a joint UCI report can be UCI for a first TRP, UCI for a second TRP, etc., where within the UCI for one TRP, the bit order can follow the existing 3GPP TS, i.e., HARQ-ACK, SR (if any), CSI part 1 and CSI part 2 (if any). In another example, the bit order of the joint UCI report can be HARQ-ACK for the first TRP, HARQ-ACK for the second TRP, HARQ-ACK for the Nth TRP, SR for the first TRP (if any), SR for the second TRP (if any), SR the Nth TRP (if any), CSI report for the first TRP (if any), CSI report for the second TRP (if any), and CSI report for the Nth TRP (if any), where N is a positive integer. In yet another example, the TRP index can be explicitly indicated to the UE. In particular, the TRP index can be configured by higher layers via NR MSI, NR RMSI, NR OSI or RRC signalling, or indicated in a MC-CE or dynamically indicated in DCI.

In one example, the TRP index can be implicitly derived from other parameters, e.g., RNT) or physical cell ID (physCellId) or serving cell (servCellIndex as configured by SpCellConfig). In another example, the TRP index can be implicitly derived from other parameters, e.g., VCID that is indicated by the network. In yet another example, for HARQ-ACK feedback, the TRP index can be associated with each PUCCH resource, PUCCH resource set, or PUCCH-Config.

In one example, when a PUCCH resource is associated with the TRP index, when the PUCCH resource is selected for carrying HARQ-ACK the UE can determine the corresponding TRP for a PUCCH transmission based on a determined PUCCH resource and association with the TRP. In another example, when the UE is configured with a TRP specific PUCCH-Config, one field in the DCI, e.g., DCI format 0_0 or 0_1 can be used to indicate which TRP is targeted for PUCCH transmission carrying HARQ-ACK feedback. In yet another example, for SR transmission, the TRP index can be associated with each PUCCH resource, or SchedulingRequestConfig or SchedulingRequestResourceConfig.

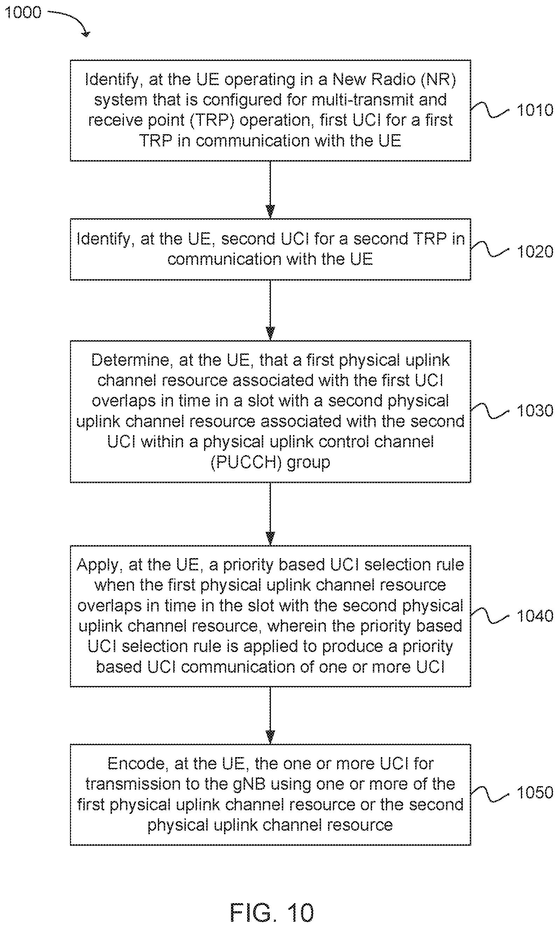

An embodiment provides functionality 1000 of a user equipment (UE) operable to encode uplink control information (UCI) for transmission to a Next Generation NodeB (gNB), as shown in FIG. 10. The UE comprises one or more processors configured to identify, at the UE operating in a New Radio (NR) system that is configured for multi-transmit and receive point (TRP) operation, first UCI for a first TRP in communication with the UE, as in block 1010. The UE comprises one or more processors configured to identify, at the UE, second UCI for a second TRP in communication with the UE, as in block 1020. The UE comprises one or more processors configured to determine, at the UE, that a first physical uplink channel resource associated with the first UCI overlaps in time in a slot with a second physical uplink channel resource associated with the second UCI within a physical uplink control channel (PUCCH) group, as in block 1030. The UE comprises one or more processors configured to apply, at the UE, a priority based UCI selection rule when the first physical uplink channel resource overlaps in time in the slot with the second physical uplink channel resource, wherein the priority based UCI selection rule is applied to produce a priority based UCI communication of one or more UCI, as in block 1040. The UE comprises one or more processors configured to encode, at the UE, the one or more UCI for transmission to the gNB using one or more of the first physical uplink channel resource or the second physical uplink channel resource, as in block 1050. In addition, the UE comprises a memory interface configured to send to a memory the one or more UCI.

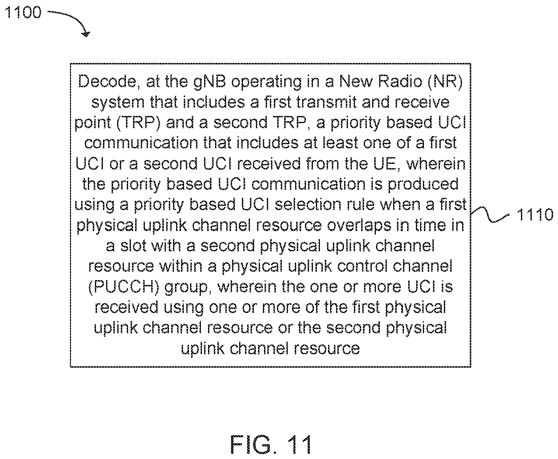

Another example provides functionality 1100 of a Next Generation NodeB (gNB) operable to decode uplink control information (UCI) received from a user equipment (UE), as shown in FIG. 11. The gNB can comprise one or more processors configured to decode, at the gNB operating in a New Radio (NR) system that includes a first transmit and receive point (TRP) and a second TRP, a priority based UCI communication that includes at least one of a first UCI or a second UCI received from the UE, wherein the priority based UCI communication is produced using a priority based UCI selection rule when a first physical uplink channel resource overlaps in time in a slot with a second physical uplink channel resource within a physical uplink control channel (PUCCH) group, wherein the one or more UCI is received using one or more of the first physical uplink channel resource or the second physical uplink channel resource, as in block 1110. In addition, the gNB can comprise a memory interface configured to send to a memory the one or more UCI.

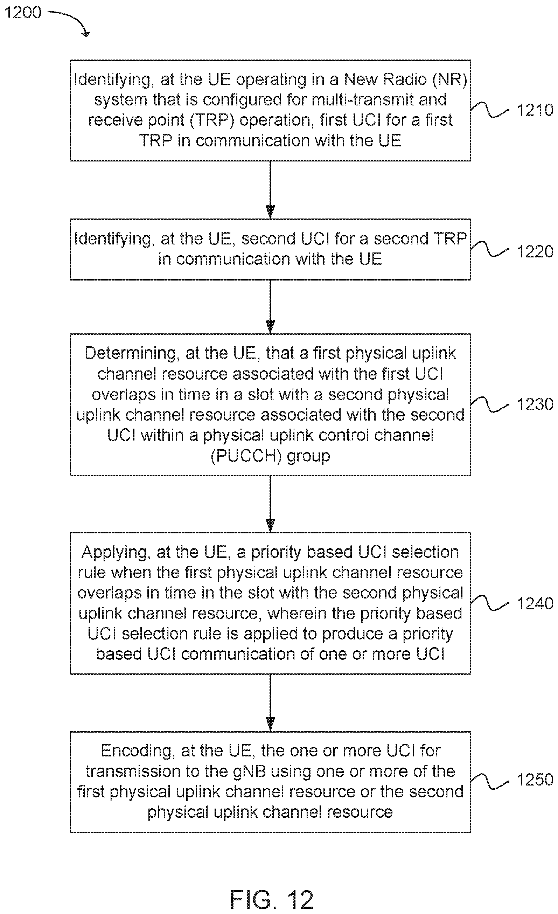

Another embodiment provides at least one machine readable storage medium having instructions 1200 embodied thereon for encoding uplink control information (UCI) for transmission from a user equipment (UE) to a Next Generation NodeB (gNB), as shown in FIG. 12. The instructions are executed on a machine, where the instructions are included on at least one computer readable medium or one non-transitory machine readable storage medium. The instructions when executed by one or more processors perform: identifying, at the UE operating in a New Radio (NR) system that is configured for multi-transmit and receive point (TRP) operation, first UCI for a first TRP in communication with the UE, as in block 1210. The instructions when executed by one or more processors perform: identifying, at the UE, second UCI for a second TRP in communication with the UE, as in block 1220. The instructions when executed by one or more processors perform: determining, at the UE, that a first physical uplink channel resource associated with the first UCI overlaps in time in a slot with a second physical uplink channel resource associated with the second UCI within a physical uplink control channel (PUCCH) group, as in block 1230. The instructions when executed by one or more processors perform: applying, at the UE, a priority based UCI selection rule when the first physical uplink channel resource overlaps in time in the slot with the second physical uplink channel resource, wherein the priority based UCI selection rule is applied to produce a priority based UCI communication of one or more UCI, as in block 1240. The instructions when executed by one or more processors perform: encoding, at the UE, the one or more UCI for transmission to the gNB using one or more of the first physical uplink channel resource or the second physical uplink channel resource, as in block 1250.

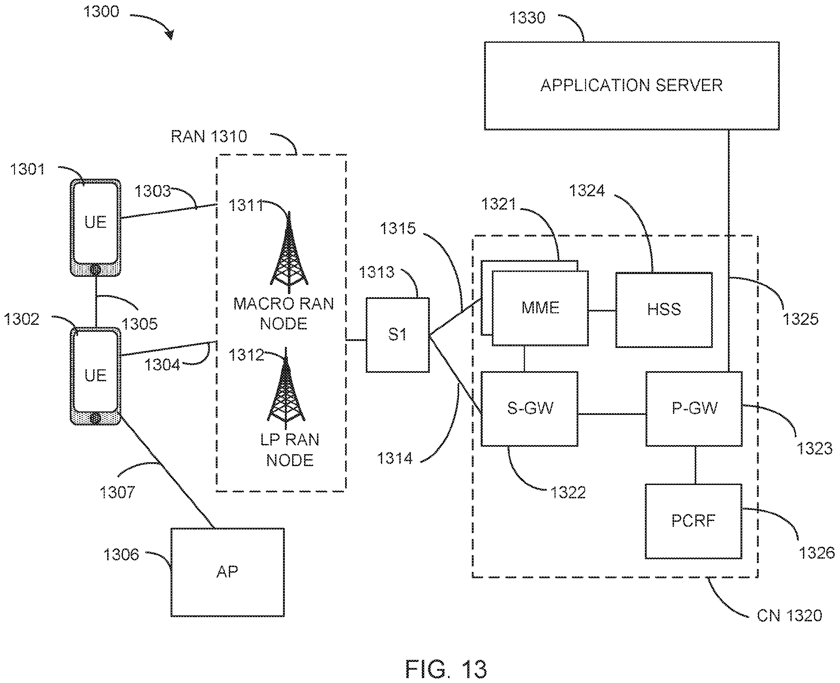

FIG. 13 illustrates an architecture of a system 1300 of a network in accordance with some examples. The system 1300 is shown to include a user equipment (UE) 1301 and a UE 1302. The UEs 1301 and 1302 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some examples, any of the UEs 1301 and 1302 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 1301 and 1302 may be configured to connect, e.g., communicatively couple, with a radio access network (RAN) 1310 - the RAN 1310 may be, for example, an Evolved Universal Mobile Telecommunications System (UMTS) Terrestrial Radio Access Network (E-UTRAN), a NextGen RAN (NG RAN), or some other type of RAN. The UEs 1301 and 1302 utilize connections 1303 and 1304, respectively, each of which comprises a physical communications interface or layer (discussed in further detail below); in this example, the connections 1303 and 1304 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this example, the UEs 1301 and 1302 may further directly exchange communication data via a ProSe interface 1305. The ProSe interface 1305 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 1302 is shown to be configured to access an access point (AP) 1306 via connection 1307. The connection 1307 can comprise a local wireless connection, such as a connection consistent with any IEEE 802.15 protocol, wherein the AP 1306 would comprise a wireless fidelity (WiFi^{®}) router. In this example, the AP 1306 is shown to be connected to the Internet without connecting to the core network of the wireless system (described in further detail below).

The RAN 1310 can include one or more access nodes that enable the connections 1303 and 1304. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 1310 may include one or more RAN nodes for providing macrocells, e.g., macro RAN node 1311, and one or more RAN nodes for providing femtocells or picocells (e.g., cells having smaller coverage areas, smaller user capacity, or higher bandwidth compared to macrocells), e.g., low power (LP) RAN node 1312.

Any of the RAN nodes 1311 and 1312 can terminate the air interface protocol and can be the first point of contact for the UEs 1301 and 1302. In some examples, any of the RAN nodes 1311 and 1312 can fulfill various logical functions for the RAN 1310 including, but not limited to, radio network controller (RNC) functions such as radio bearer management, uplink and downlink dynamic radio resource management and data packet scheduling, and mobility management.

In accordance with some examples, the UEs 1301 and 1302 can be configured to communicate using Orthogonal Frequency-Division Multiplexing (OFDM) communication signals with each other or with any of the RAN nodes 1311 and 1312 over a multi carrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications). The OFDM signals can comprise a plurality of orthogonal subcarriers.

In some examples, a downlink resource grid can be used for downlink transmissions from any of the RAN nodes 1311 and 1312 to the UEs 1301 and 1302, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 1301 and 1302. The physical downlink control channel (PDCCH) may carry information about the transport format and resource allocations related to the PDSCH channel, among other things. It may also inform the UEs 1301 and 1302 about the transport format, resource allocation, and H-ARQ (Hybrid Automatic Repeat Request) information related to the uplink shared channel. Typically, downlink scheduling (assigning control and shared channel resource blocks to the UE 1302 within a cell) may be performed at any of the RAN nodes 1311 and 1312 based on channel quality information fed back from any of the UEs 1301 and 1302. The downlink resource assignment information may be sent on the PDCCH used for (e.g., assigned to) each of the UEs 1301 and 1302.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some examples may use concepts for resource allocation for control channel information that are an extension of the above-described concepts. For example, some examples may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 1310 is shown to be communicatively coupled to a core network (CN) 1320 -via an S1 interface 1313. In examples, the CN 1320 may be an evolved packet core (EPC) network, a NextGen Packet Core (NPC) network, or some other type of CN. In this example the S1 interface 1313 is split into two parts: the S1-U interface 1314, which carries traffic data between the RAN nodes 1311 and 1312 and the serving gateway (S-GW) 1322, and the S1-mobility management entity (MME) interface 1315, which is a signaling interface between the RAN nodes 1311 and 1312 and MMEs 1321.

In this example, the CN 1320 comprises the MMEs 1321, the S-GW 1322, the Packet Data Network (PDN) Gateway (P-GW) 1323, and a home subscriber server (HSS) 1324. The MMEs 1321 may be similar in function to the control plane of legacy Serving General Packet Radio Service (GPRS) Support Nodes (SGSN). The MMEs 1321 may manage mobility aspects in access such as gateway selection and tracking area list management. The HSS 1324 may comprise a database for network users, including subscription-related information to support the network entities' handling of communication sessions. The CN 1320 may comprise one or several HSSs 1324, depending on the number of mobile subscribers, on the capacity of the equipment, on the organization of the network, etc. For example, the HSS 1324 can provide support for routing/roaming, authentication, authorization, naming/addressing resolution, location dependencies, etc.

The S-GW 1322 may terminate the S1 interface 1313 towards the RAN 1310, and routes data packets between the RAN 1310 and the CN 1320. In addition, the S-GW 1322 may be a local mobility anchor point for inter-RAN node handovers and also may provide an anchor for inter-3GPP mobility. Other responsibilities may include lawful intercept, charging, and some policy enforcement.

The P-GW 1323 may terminate an SGi interface toward a PDN. The P-GW 1323 may route data packets between the EPC network 1323 and external networks such as a network including the application server 1330 (alternatively referred to as application function (AF)) via an Internet Protocol (IP) interface 1325. Generally, the application server 1330 may be an element offering applications that use IP bearer resources with the core network (e.g., UMTS Packet Services (PS) domain, LTE PS data services, etc.). In this example, the P-GW 1323 is shown to be communicatively coupled to an application server 1330 via an IP communications interface 1325. The application server 1330 can also be configured to support one or more communication services (e.g., Voice-over-Internet Protocol (VoIP) sessions, PTT sessions, group communication sessions, social networking services, etc.) for the UEs 1301 and 1302 via the CN 1320.

The P-GW 1323 may further be a node for policy enforcement and charging data collection. Policy and Charging Enforcement Function (PCRF) 1326 is the policy and charging control element of the CN 1320. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 1326 may be communicatively coupled to the application server 1330 via the P-GW 1323. The application server 1330 may signal the PCRF 1326 to indicate a new service flow and select the appropriate Quality of Service (QoS) and charging parameters. The PCRF 1326 may provision this rule into a Policy and Charging Enforcement Function (PCEF) (not shown) with the appropriate traffic flow template (TFT) and QoS class of identifier (QCI), which commences the QoS and charging as specified by the application server 1330.

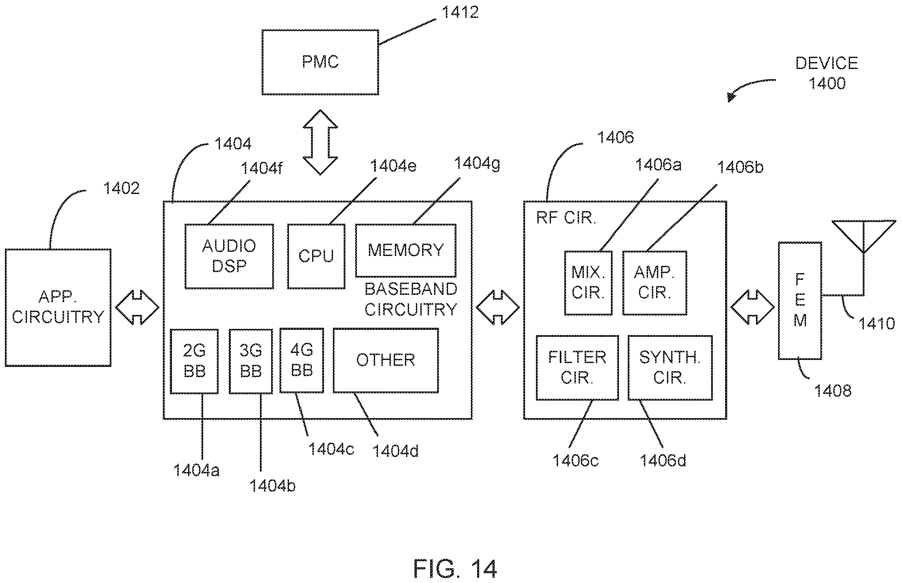

FIG. 14 illustrates example components of a device 1400 in accordance with some examples. In some examples, the device 1400 may include application circuitry 1402, baseband circuitry 1404, Radio Frequency (RF) circuitry 1406, front-end module (FEM) circuitry 1408, one or more antennas 1410, and power management circuitry (PMC) 1412 coupled together at least as shown. The components of the illustrated device 1400 may be included in a UE or a RAN node. In some examples, the device 1400 may include less elements (e.g., a RAN node may not utilize application circuitry 1402, and instead include a processor/controller to process IP data received from an EPC). In some examples, the device 1400 may include additional elements such as, for example, memory/storage, display, camera, sensor, or input/output (I/O) interface. In other examples, the components described below may be included in more than one device (e.g., said circuitries may be separately included in more than one device for Cloud-RAN (C-RAN) implementations).

The application circuitry 1402 may include one or more application processors. For example, the application circuitry 1402 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 1400. In some examples, processors of application circuitry 1402 may process IP data packets received from an EPC.

The baseband circuitry 1404 may include circuitry such as, but not limited to, one or more single-core or multi-core processors. The baseband circuitry 1404 may include one or more baseband processors or control logic to process baseband signals received from a receive signal path of the RF circuitry 1406 and to generate baseband signals for a transmit signal path of the RF circuitry 1406. Baseband processing circuity 1404 may interface with the application circuitry 1402 for generation and processing of the baseband signals and for controlling operations of the RF circuitry 1406. For example, in some examples, the baseband circuitry 1404 may include a third generation (3G) baseband processor 1404a, a fourth generation (4G) baseband processor 1404b, a fifth generation (5G) baseband processor 1404c, or other baseband processor(s) 1404d for other existing generations, generations in development or to be developed in the future (e.g., second generation (2G), sixth generation (6G), etc.). The baseband circuitry 1404 (e.g., one or more of baseband processors 1404a-d) may handle various radio control functions that enable communication with one or more radio networks via the RF circuitry 1406. In other examples, some or all of the functionality of baseband processors 1404a-d may be included in modules stored in the memory 1404g and executed via a Central Processing Unit (CPU) 1404e. The radio control functions may include, but are not limited to, signal modulation/demodulation, encoding/decoding, radio frequency shifting, etc. In some examples, modulation/demodulation circuitry of the baseband circuitry 1404 may include Fast-Fourier Transform (FFT), precoding, or constellation mapping/demapping functionality. In some examples, encoding/decoding circuitry of the baseband circuitry 1404 may include convolution, tail-biting convolution, turbo, Viterbi, or Low Density Parity Check (LDPC) encoder/decoder functionality. Examples of modulation/demodulation and encoder/decoder functionality are not limited to these examples and may include other suitable functionality in other examples.

In some examples, the baseband circuitry 1404 may include one or more audio digital signal processor(s) (DSP) 1404f. The audio DSP(s) 1404f may be include elements for compression/decompression and echo cancellation and may include other suitable processing elements in other examples. Components of the baseband circuitry may be suitably combined in a single chip, a single chipset, or disposed on a same circuit board in some examples. In some examples, some or all of the constituent components of the baseband circuitry 1404 and the application circuitry 1402 may be implemented together such as, for example, on a system on a chip (SOC).

In some examples, the baseband circuitry 1404 may provide for communication compatible with one or more radio technologies. For example, in some examples, the baseband circuitry 1404 may support communication with an evolved universal terrestrial radio access network (EUTRAN) or other wireless metropolitan area networks (WMAN), a wireless local area network (WLAN), a wireless personal area network (WPAN). Examples in which the baseband circuitry 1404 is configured to support radio communications of more than one wireless protocol may be referred to as multi-mode baseband circuitry.

RF circuitry 1406 may enable communication with wireless networks using modulated electromagnetic radiation through a non-solid medium. In various examples, the RF circuitry 1406 may include switches, filters, amplifiers, etc. to facilitate the communication with the wireless network. RF circuitry 1406 may include a receive signal path which may include circuitry to down-convert RF signals received from the FEM circuitry 1408 and provide baseband signals to the baseband circuitry 1404. RF circuitry 1406 may also include a transmit signal path which may include circuitry to up-convert baseband signals provided by the baseband circuitry 1404 and provide RF output signals to the FEM circuitry 1408 for transmission.

In some examples, the receive signal path of the RF circuitry 1406 may include mixer circuitry 1406a, amplifier circuitry 1406b and filter circuitry 1406c. In some examples, the transmit signal path of the RF circuitry 1406 may include filter circuitry 1406c and mixer circuitry 1406a. RF circuitry 1406 may also include synthesizer circuitry 1406d for synthesizing a frequency for use by the mixer circuitry 1406a of the receive signal path and the transmit signal path. In some examples, the mixer circuitry 1406a of the receive signal path may be configured to down-convert RF signals received from the FEM circuitry 1408 based on the synthesized frequency provided by synthesizer circuitry 1406d. The amplifier circuitry 1406b may be configured to amplify the down-converted signals and the filter circuitry 1406c may be a low-pass filter (LPF) or bandpass filter (BPF) configured to remove unwanted signals from the down-converted signals to generate output baseband signals. Output baseband signals may be provided to the baseband circuitry 1404 for further processing. In some examples, the output baseband signals may be zero-frequency baseband signals, although this is not a requirement. In some examples, mixer circuitry 1406a of the receive signal path may comprise passive mixers.

In some examples, the mixer circuitry 1406a of the transmit signal path may be configured to up-convert input baseband signals based on the synthesized frequency provided by the synthesizer circuitry 1406d to generate RF output signals for the FEM circuitry 1408. The baseband signals may be provided by the baseband circuitry 1404 and may be filtered by filter circuitry 1406c.

In some examples, the mixer circuitry 1406a of the receive signal path and the mixer circuitry 1406a of the transmit signal path may include two or more mixers and may be arranged for quadrature downconversion and upconversion, respectively. In some examples, the mixer circuitry 1406a of the receive signal path and the mixer circuitry 1406a of the transmit signal path may include two or more mixers and may be arranged for image rejection (e.g., Hartley image rejection). In some examples, the mixer circuitry 1406a of the receive signal path and the mixer circuitry 1406a may be arranged for direct downconversion and direct upconversion, respectively. In some examples, the mixer circuitry 1406a of the receive signal path and the mixer circuitry 1406a of the transmit signal path may be configured for super-heterodyne operation.

In some examples, the output baseband signals and the input baseband signals may be analog baseband signals. In some alternate examples, the output baseband signals and the input baseband signals may be digital baseband signals. In these alternate examples, the RF circuitry 1406 may include analog-to-digital converter (ADC) and digital-to-analog converter (DAC) circuitry and the baseband circuitry 1404 may include a digital baseband interface to communicate with the RF circuitry 1406.

In some dual-mode examples, a separate radio IC circuitry may be provided for processing signals for each spectrum.

In some examples, the synthesizer circuitry 1406d may be a fractional-N synthesizer or a fractional N/N+1 synthesizer, wherein other types of frequency synthesizers may be suitable. For example, synthesizer circuitry 1406d may be a delta-sigma synthesizer, a frequency multiplier, or a synthesizer comprising a phase-locked loop with a frequency divider.

The synthesizer circuitry 1406d may be configured to synthesize an output frequency for use by the mixer circuitry 1406a of the RF circuitry 1406 based on a frequency input and a divider control input. In some examples, the synthesizer circuitry 1406d may be a fractional N/N+1 synthesizer.

In some examples, frequency input may be provided by a voltage controlled oscillator (VCO), although that is not a requirement. Divider control input may be provided by either the baseband circuitry 1404 or the applications processor 1402 depending on the desired output frequency. In some examples, a divider control input (e.g., N) may be determined from a look-up table based on a channel indicated by the applications processor 1402.

Synthesizer circuitry 1406d of the RF circuitry 1406 may include a divider, a delay-locked loop (DLL), a multiplexer and a phase accumulator. In some examples, the divider may be a dual modulus divider (DMD) and the phase accumulator may be a digital phase accumulator (DPA). In some examples, the DMD may be configured to divide the input signal by either N or N+1 (e.g., based on a carry out) to provide a fractional division ratio. In some examples, the DLL may include a set of cascaded, tunable, delay elements, a phase detector, a charge pump and a D-type flip-flop. In these examples, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some examples, synthesizer circuitry 1406d may be configured to generate a carrier frequency as the output frequency, while in other examples, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some examples, the output frequency may be a LO frequency (fLO). In some examples, the RF circuitry 1406 may include an IQ/polar converter.

FEM circuitry 1408 may include a receive signal path which may include circuitry configured to operate on RF signals received from one or more antennas 1410, amplify the received signals and provide the amplified versions of the received signals to the RF circuitry 1406 for further processing. FEM circuitry 1408 may also include a transmit signal path which may include circuitry configured to amplify signals for transmission provided by the RF circuitry 1406 for transmission by one or more of the one or more antennas 1410. In various examples, the amplification through the transmit or receive signal paths may be done solely in the RF circuitry 1406, solely in the FEM 1408, or in both the RF circuitry 1406 and the FEM 1408.

In some examples, the FEM circuitry 1408 may include a TX/RX switch to switch between transmit mode and receive mode operation. The FEM circuitry may include a receive signal path and a transmit signal path. The receive signal path of the FEM circuitry may include an LNAto amplify received RF signals and provide the amplified received RF signals as an output (e.g., to the RF circuitry 1406). The transmit signal path of the FEM circuitry 1408 may include a power amplifier (PA) to amplify input RF signals (e.g., provided by RF circuitry 1406), and one or more filters to generate RF signals for subsequent transmission (e.g., by one or more of the one or more antennas 1410).

In some examples, the PMC 1412 may manage power provided to the baseband circuitry 1404. In particular, the PMC 1412 may control power-source selection, voltage scaling, battery charging, or DC-to-DC conversion. The PMC 1412 may often be included when the device 1400 is capable of being powered by a battery, for example, when the device is included in a UE. The PMC 1412 may increase the power conversion efficiency while providing desirable implementation size and heat dissipation characteristics.

While FIG. 14 shows the PMC 1412 coupled only with the baseband circuitry 1404. However, in other examples, the PMC 14 12 may be additionally or alternatively coupled with, and perform similar power management operations for, other components such as, but not limited to, application circuitry 1402, RF circuitry 1406, or FEM 1408.

In some examples, the PMC 1412 may control, or otherwise be part of, various power saving mechanisms of the device 1400. For example, if the device 1400 is in an RRC_Connected state, where it is still connected to the RAN node as it expects to receive traffic shortly, then it may enter a state known as Discontinuous Reception Mode (DRX) after a period of inactivity. During this state, the device 1400 may power down for brief intervals of time and thus save power.

If there is no data traffic activity for an extended period of time, then the device 1400 may transition off to an RRC_Idle state, where it disconnects from the network and does not perform operations such as channel quality feedback, handover, etc. The device 1400 goes into a very low power state and it performs paging where again it periodically wakes up to listen to the network and then powers down again. The device 1400 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1402 and processors of the baseband circuitry 1404 may be used to execute elements of one or more instances of a protocol stack. For example, processors of the baseband circuitry 1404, alone or in combination, may be used execute Layer 3, Layer 2, or Layer 1 functionality, while processors of the application circuitry 1404 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

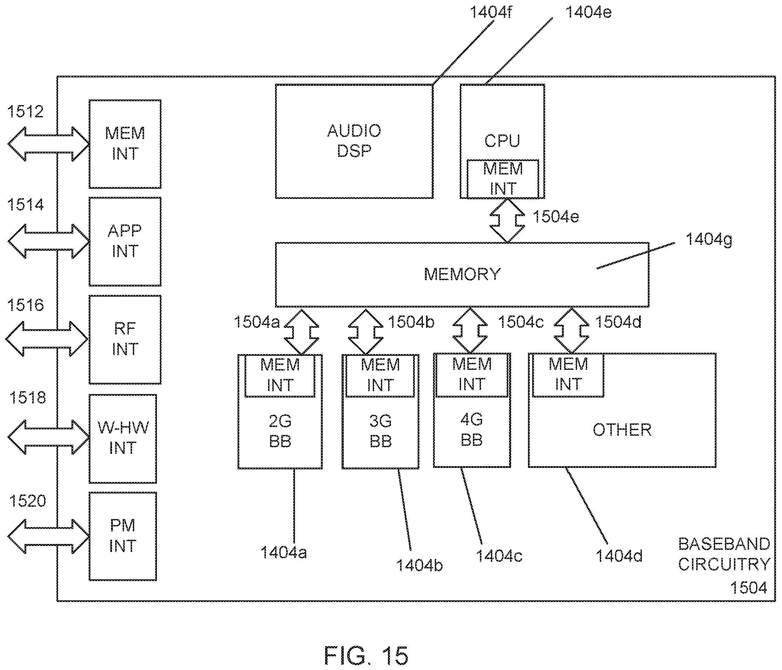

FIG. 15 illustrates example interfaces of baseband circuitry in accordance with some examples. As discussed above, the baseband circuitry 1404 of FIG. 14 may comprise processors 1404a-1404e and a memory 1404g utilized by said processors. Each of the processors 1404a-1404e may include a memory interface, 1504a-1504e, respectively, to send/receive data to/from the memory 1404g.

The baseband circuitry 1404 may further include one or more interfaces to communicatively couple to other circuitries/devices, such as a memory interface 1512 (e.g., an interface to send/receive data to/from memory external to the baseband circuitry 1404), an application circuitry interface 1514 (e.g., an interface to send/receive data to/from the application circuitry 1402 of FIG. 14), an RF circuitry interface 1516 (e.g., an interface to send/receive data to/from RF circuitry 1406 of FIG. 14), a wireless hardware connectivity interface 1518 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 1520 (e.g., an interface to send/receive power or control signals to/from the PMC 1412.

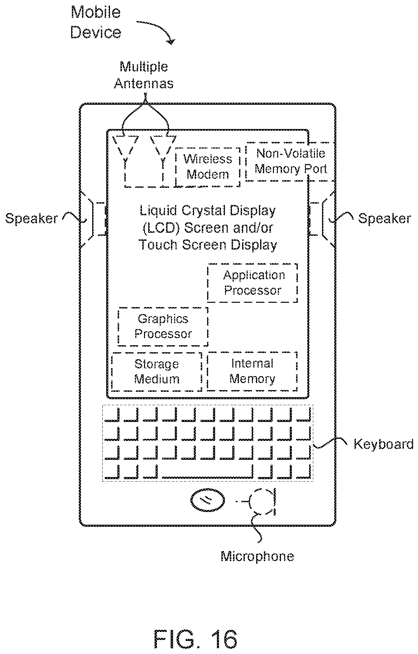

FIG. 16 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 16 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some examples, the circuitry may be implemented in, or functions associated with the circuitry may be implemented by, one or more software or firmware modules. In some embodiments, circuitry includes logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one example of the present technology. Thus, appearances of the phrases "in an example" or the word "exemplary" in various places throughout this specification are not necessarily all referring to the same example.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various examples of the present technology may be referred to herein along with alternatives for the various components thereof. It is understood that such examples and alternatives are not to be construed as defacto equivalents of one another, but are to be considered as separate and autonomous representations of the present technology.

Furthermore, the described features, structures, or characteristics may be combined in any suitable manner in one or more examples. In the following description, numerous specific details are provided, such as examples of layouts, distances, network examples, etc., to provide a thorough understanding of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

The invention is defined by the appended claims 1-13.

## Claims

1. An apparatus of a user equipment, UE (1301, 1302), operable to encode uplink control information, UCI, for transmission to a Next Generation NodeB, gNB, the apparatus comprising:
one or more processors configured to:
identify (1010), at the UE operating in a New Radio, NR, system that is configured for multi-transmit and receive point, TRP, operation, first UCI for a first TRP in communication with the UE (1301, 1302);
identify (1020), at the UE (1301, 1302), second UCI for a second TRP in communication with the UE (1301, 1302);
determine (1030), at the UE (1301, 1302), that a first physical uplink channel resource associated with the first UCI overlaps in time in a slot with a second physical uplink channel resource associated with the second UCI within a physical uplink control channel, PUCCH, group;
apply (1040), at the UE (1301, 1302), a priority based UCI selection rule when the first physical uplink channel resource overlaps in time in the slot with the second physical uplink channel resource, wherein the priority based UCI selection rule defines that: hybrid automatic repeat request - acknowledgement, HARQ-ACK, feedback has a higher priority than a scheduling request, SR, a SR has a higher priority than channel state information, CSI, with higher priority, and CSI with higher priority has a higher priority than CSI with lower priority, wherein the priority based UCI selection rule is applied to produce a priority based UCI communication of one or more UCI; and
encode (1050), at the UE (1301, 1302), the one or more UCI for transmission to the gNB based on the priority based UCI communication, using one or more of the first physical uplink channel resource or the second physical uplink channel resource; and
a memory interface (1512) configured to send to a memory the one or more UCI.

2. The apparatus of claim 1, further comprising a transceiver configured to transmit the one or more UCI to the gNB.

3. The apparatus of any of claims 1-2, wherein the one or more processors are configured to: multiplex the first UCI and the second UCI to form the priority based UCI communication in accordance with the priority based UCI selection rule.

4. The apparatus of any of claims 1-3, wherein the one or more processors are configured to:
select one of the first UCI or the second UCI based on the priority based UCI selection rule, to produce the priority based UCI; and
drop a remaining UCI based on the priority based UCI selection rule.

5. The apparatus of any of claims 1-4, wherein the one or more processors are configured to decode a TRP index received from the gNB for each of the first physical uplink channel resource and the second physical uplink channel resource, wherein the priority based UCI selection rule defines that when a priority order of UCIs for different TRPs is the same, UCI for a TRP with a lowest TRP index is transmitted from the UE (1301, 1302) and other UCIs are dropped at the UE (1301, 1302).

6. The apparatus of any of claims 1-5, wherein the priority based UCI communication is a joint UCI report, wherein a bit order for the joint UCI report is the first UCI for the first TRP and the second UCI for the second TRP, wherein the first UCI includes one or more of: a hybrid automatic repeat request - acknowledgement, HARQ-ACK, a scheduling request, SR, and a channel state information, CSI, report for the first TRP, and the second UCI includes one or more of: a HARQ-ACK, an SR and a CSI report for the second TRP.

7. The apparatus of any of claims 1-6, wherein the priority based UCI communication is a joint UCI report, wherein a bit order for the joint UCI report is one or more of: a hybrid automatic repeat request - acknowledgement, HARQ-ACK, for the first TRP, a HARQ-ACK for the second TRP, a scheduling request, SR, for the first TRP, an SR for the second TRP, a channel state information, CSI, report for the first TRP, and a CSI report for the second TRP.

8. The apparatus of any of claims 1-7, wherein the first physical uplink channel resource is associated with a first TRP index and the second physical uplink channel resource is associated with a second TRP index, wherein the first TRP index and the second TRP index are configured by higher layers via NR minimum system information, MSI, NR remaining minimum system information, RMSI, NR other system information, OSI, or radio resource control, RRC, signaling, or indicated in a medium access control - control element, MAC-CE, or dynamically indicated in downlink control information, DCI.

9. The apparatus of any of claims 1-8, wherein the first physical uplink channel resource is associated with a first TRP index and the second physical uplink channel resource is associated with a second TRP index, wherein the first TRP index and the second TRP index are derived from a Radio Network Temporary Identifier, RNTI, a physical cell identifier or a serving cell index.

10. At least one machine readable storage medium comprising instructions (1200) embodied thereon for encoding uplink control information, UCI, for transmission from a user equipment, UE (1301, 1302), to a Next Generation NodeB, gNB, the instructions (1200) when executed by one or more processors, cause the one or more processors to carry out the steps of:
identifying (1210), at the UE operating in a New Radio, NR, system that is configured for multi-transmit and receive point, TRP, operation, first UCI for a first TRP in communication with the UE (1301, 1302);
identifying (1220), at the UE (1301, 1302), second UCI for a second TRP in communication with the UE (1301, 1302);
determining (1230), at the UE (1301, 1302), that a first physical uplink channel resource associated with the first UCI overlaps in time in a slot with a second physical uplink channel resource associated with the second UCI;
applying (1240), at the UE (1301, 1302), a priority based UCI selection rule when the first physical uplink channel resource overlaps in time in the slot with the second physical uplink channel resource, wherein the priority based UCI selection rule defines that: hybrid automatic repeat request - acknowledgement, HARQ-ACK, feedback has a higher priority than a scheduling request, SR, a SR has a higher priority than channel state information, CSI, with higher priority, and CSI with higher priority has a higher priority than CSI with lower priority, wherein the priority based UCI selection rule is applied to produce a priority based UCI communication of one or more UCI; and
encoding (1250), at the UE (1301, 1302), the one or more UCI for transmission to the gNB based on the priority based UCI communication, using one or more of the first physical uplink channel resource or the second physical uplink channel resource.

11. The at least one machine readable storage medium of claim 10, further comprising instructions (1200) which, when executed by the one or more processors, cause the one or more processors to carry out the step of: multiplexing the first UCI and the second UCI to form the priority based UCI communication in accordance with the priority based UCI selection rule.

12. The at least one machine readable storage medium of any of claims 10-11, further comprising instructions (1200) which, when executed by the one or more processors, cause the one or more processors to carry out the steps of:
selecting one of the first UCI or the second UCI based on the priority based UCI selection rule, to produce the priority based UCI; and
dropping a remaining UCI based on the priority based UCI selection rule.

13. The at least one machine readable storage medium of any of claims 10-12, further comprising instructions (1200) which, when executed by the one or more processors, cause the one or more processors to carry out the step of: decoding a TRP index received from the gNB for each of the first physical uplink channel resource and the second physical uplink channel resource, wherein the priority based UCI selection rule defines that when a priority order of UCIs for different TRPs is the same, UCI for a TRP with a lowest TRP index is transmitted from the UE (1301, 1302) and other UCIs are dropped at the UE (1301, 1302).

## Patentansprüche

1. Vorrichtung eines Benutzergeräts, UE (1301, 1302), die zum Codieren von Uplink-Steuerinformation, UCI, zur Übertragung an einen NodeB der nächsten Generation, gNB, ausgelegt ist, wobei die Vorrichtung umfasst:
einen oder mehrere Prozessoren, die konfiguriert sind zum:
Identifizieren (1010) einer ersten UCI am UE, das in einem New-Radio-,NR-,System operiert, das für Betrieb mit mehreren Sende- und Empfangspunkten, TRP, konfiguriert ist, für einen ersten TRP in Kommunikation mit dem UE (1301, 1302);
Identifizieren (1020) einer zweiten UCI am UE (1301, 1302) für einen zweiten TRP in Kommunikation mit dem UE (1301, 1302);
Bestimmen (1030) am UE (1301, 1302), dass eine erste physikalische Uplink-Kanalressource, die mit der ersten UCI assoziiert ist, sich mit einer zweiten physikalischen Uplink-Kanalressource, die mit der zweiten UCI assoziiert ist, innerhalb einer ersten Gruppe von physikalischen Uplink-Steuerkanälen, PUCCH, zeitlich überlappt;
Anwenden (1040) einer prioritätsbasierten UCI-Auswahlregel am UE (1301, 1302), wenn die erste physikalische Uplink-Kanalressource sich im Schlitz mit der zweiten physikalischen Uplink-Kanalressource zeitlich überlappt, wobei die prioritätsbasierte UCI-Auswahlregel definiert, dass: Rückmeldung bezüglich einer Bestätigung einer hybriden automatischen Wiederholungsanforderung, HARQ-ACK, eine höhere Priorität aufweist als eine Dispositionsanforderung, SR, eine SR eine höhere Priorität aufweist als Kanalzustandsinformation, CSI, mit höherer Priorität und CSI mit höherer Priorität eine höhere Priorität aufweist als CSI mit niedrigerer Priorität, wobei die prioritätsbasierte UCI-Auswahlregel angewendet wird, um eine prioritätsbasierte UCI-Kommunikation einer oder mehrerer UCIs zu erzeugen; und
Codieren (1050) der einen oder mehreren UCIs zur Übertragung an den gNB am UE (1301, 1302) basierend auf der prioritätsbasierten UCI-Kommunikation unter Verwendung einer oder mehrerer der ersten physikalischen Uplink-Kanalressource oder der zweiten physikalischen Uplink-Kanalressource; und
eine Speicherschnittstelle (1512), die zum Senden der einen oder der mehreren UCIs an einen Speicher konfiguriert ist.

2. Vorrichtung nach Anspruch 1, ferner umfassend einen Sendeempfänger, der zum Senden der einen oder der mehreren UCIs an den gNB konfiguriert ist.

3. Verfahren nach einem der Ansprüche 1 bis 2, wobei der eine oder die mehreren Prozessoren konfiguriert sind zum: Multiplexen der ersten UCI und der zweiten UCI, um die prioritätsbasierte UCI-Kommunikation gemäß der prioritätsbasierten UCI-Auswahlregel zu bilden.

4. Vorrichtung nach einem der Ansprüche 1 bis 3, wobei der eine oder die mehreren Prozessoren konfiguriert sind zum:
Auswählen einer der ersten UCI oder der zweiten UCI basierend auf der prioritätsbasierten UCI-Auswahlregel, um die prioritätsbasierte UCI zu erzeugen; und
Verwerfen einer verbleibenden UCI basierend auf der prioritätsbasierten UCI-Auswahlregel.

5. Vorrichtung nach einem der Ansprüche 1 bis 4, wobei der eine oder die mehreren Prozessoren zum Decodieren eines TRP-Index konfiguriert sind, der vom gNB für jede der ersten physikalischen Uplink-Kanalressource und der zweiten Uplink-Kanalressource empfangen wird, wobei die prioritätsbasierte UCI-Auswahlregel definiert, dass, wenn eine Prioritätsreihenfolge von UCIs für verschiedene TRPs gleich ist, eine UCI für einen TRP mit einem niedrigsten TRP-Index vom UE (1301, 1302) gesendet wird und andere UCIs am UE (1301, 1302) verworfen werden.

6. Vorrichtung nach einem der Ansprüche 1 bis 5, wobei die prioritätsbasierte UCI-Kommunikation ein gemeinsamer UCI-Bericht ist, wobei eine Bitreihenfolge für den gemeinsamen UCI-Bericht die erste UCI für den ersten TRP und die zweite UCI für den zweiten TRP ist , wobei die erste UCI eines oder mehrere umfasst von: einer Bestätigung einer hybriden automatischen Wiederholungsanforderung, HARQ-ACK, einer Dispositionsanforderung, SR, und einem Kanalzustandsinformations-,CSI-,Bericht für den ersten TRP, und die zweite UCI eines oder mehrere umfasst von: einer HARQ-ACK, einer SR und einem CSI-Bericht für den zweiten TRP.

7. Vorrichtung nach einem der Ansprüche 1 bis 6, wobei die prioritätsbasierte UCI-Kommunikation ein gemeinsamer UCI-Bericht ist, wobei eine Bitreihenfolge für den gemeinsamen UCI-Bericht eines oder mehreres ist von: einer Bestätigung einer hybriden automatischen Wiederholungsanforderung, HARQ-ACK für den ersten TRP, einer HARQ-ACK für den zweiten TRP, einer Dispositionsanforderung, SR, für den ersten TRP, einer SR für den zweiten TRP, einem Kanalzustandsinformations-,CSI-,Bericht für den ersten TRP und einem CSI-Bericht für den zweiten TRP.

8. Vorrichtung nach einem der Ansprüche 1 bis 7, wobei die erste physikalische Uplink-Kanalressource mit einem ersten TRP-Index assoziiert ist und die zweite physikalische Uplink-Kanalressource mit einem zweiten TRP-Index assoziiert ist, wobei der erste TRP-Index und der zweite TRP-Index von höheren Schichten über NR-Mindestsysteminformation, MSI, verbleibende NR-Mindestsysteminformation, RMSI, andere NR-Systeminformation, OSI, oder Funkressourcensteuerungs-,RRC-,Signalisierung konfiguriert oder in einem Medienzugriffssteuerungs-Steuerelement, MAC-CE, angegeben oder in Downlink-Steuerinformation, DCI, dynamisch angegeben werden.

9. Vorrichtung nach einem der Ansprüche 1 bis 8, wobei die erste physikalische Uplink-Kanalressource mit einem ersten TRP-Index assoziiert ist und die zweite physikalische Uplink-Kanalressource mit einem zweiten TRP-Index assoziiert ist, wobei der erste TRP-Index und der zweite TRP-Index von einer temporären Funknetzwerkkennung, RNTI, einer physikalischen Zellkennung oder einem Index einer bedienenden Zelle abgeleitet sind.

10. Mindestens ein maschinenlesbares Speichermedium, das darauf eingebettete Anweisungen (1200) zum Codieren von Uplink-Steuerinformation, UCI, zur Übertragung von einem Benutzergerät, UE (1301, 1302), an einen NodeB der nächsten Generation, gNB, umfasst, wobei die Anweisungen (1200) bei Ausführung durch einen oder mehrere Prozessoren den einen oder die mehreren Prozessoren zum Ausführen der folgenden Schritte veranlassen:
Identifizieren (1210) einer ersten UCI am UE, das in einem New-Radio-,NR-,System operiert, das für Betrieb mit mehreren Sende- und Empfangspunkten, TRP, konfiguriert ist, für einen ersten TRP in Kommunikation mit dem UE (1301, 1302);
Identifizieren (1220) einer zweiten UCI am UE (1301, 1302) für einen zweiten TRP in Kommunikation mit dem UE (1301, 1302);
Bestimmen (1230) am UE (1301, 1302), dass eine erste physikalische Uplink-Kanalressource, die mit der ersten UCI assoziiert ist, sich in einem Schlitz mit einer zweiten physikalischen Uplink-Kanalressource, die mit der zweiten UCI assoziiert ist, zeitlich überlappt;
Anwenden (1240) einer prioritätsbasierten UCI-Auswahlregel am UE (1301, 1302), wenn die erste physikalische Uplink-Kanalressource sich im Schlitz mit der zweiten physikalischen Uplink-Kanalressource zeitlich überlappt, wobei die prioritätsbasierte UCI-Auswahlregel definiert, dass: Rückmeldung bezüglich einer Bestätigung einer hybriden automatischen Wiederholungsanforderung, HARQ-ACK, eine höhere Priorität aufweist als eine Dispositionsanforderung, SR, eine SR eine höhere Priorität aufweist als Kanalzustandsinformation, CSI, mit höherer Priorität und CSI mit höherer Priorität eine höhere Priorität aufweist als CSI mit niedrigerer Priorität, wobei die prioritätsbasierte UCI-Auswahlregel angewendet wird, um eine prioritätsbasierte UCI-Kommunikation einer oder mehrerer UCIs zu erzeugen; und
Codieren (1250) der einen oder der mehreren UCIs am UE (1301, 1302) zur Übertragung an den gNB basierend auf der prioritätsbasierten UCI-Kommunikation unter Verwendung einer oder mehrerer der ersten physikalischen Uplink-Kanalressource oder der zweiten physikalischen Uplink-Kanalressource.

11. Mindestens ein maschinenlesbares Speichermedium nach Anspruch 10, ferner umfassend Anweisungen (1200), die bei Ausführung durch den einen oder die mehreren Prozessoren den einen oder die mehreren Prozessoren zum Ausführen des folgenden Schritts veranlassen:
Multiplexen der ersten UCI und der zweiten UCI, um die prioritätsbasierte UCI-Kommunikation gemäß der prioritätsbasierten UCI-Auswahlregel zu bilden.

12. Mindestens ein maschinenlesbares Speichermedium nach einem der Ansprüche 10 bis 11, ferner umfassend Anweisungen (1200), die bei Ausführung durch den einen oder die mehreren Prozessoren den einen oder die mehreren Prozessoren zum Ausführen der folgenden Schritte veranlassen:
Auswählen einer der ersten UCI oder der zweiten UCI basierend auf der prioritätsbasierten UCI-Auswahlregel, um die prioritätsbasierte UCI zu erzeugen; und
Verwerfen einer verbleibenden UCI basierend auf der prioritätsbasierten UCI-Auswahlregel.

13. Mindestens ein maschinenlesbares Speichermedium nach einem der Ansprüche 10 bis 12, ferner umfassend Anweisungen (1200), die bei Ausführung durch den einen oder die mehreren Prozessoren den einen oder die mehreren Prozessoren zum Ausführen des folgenden Schritts veranlassen:
Decodieren eines TRP-Index, der vom gNB für jede der ersten physikalischen Uplink-Kanalressource und der zweiten Uplink-Kanalressource empfangen wird, wobei die prioritätsbasierte UCI-Auswahlregel definiert, dass, wenn eine Prioritätsreihenfolge von UCIs für verschiedene TRPs gleich ist, eine UCI für einen TRP mit einem niedrigsten TRP-Index vom UE (1301, 1302) gesendet wird und andere UCIs am UE (1301, 1302) verworfen werden.

## Revendications

1. Appareil d'un équipement utilisateur, UE (1301, 1302), capable de coder des informations de commande de liaison montante, UCI, en vue de leur transmission à un noeud de prochaine génération, gNB, l'appareil comprenant :
un ou plusieurs processeurs configurés pour :
identifier (1010), au niveau de l'UE fonctionnant dans un système New Radio, NR, configuré pour un fonctionnement à plusieurs points d'émission et de réception, TRP, les premières UCI pour un premier TRP en communication avec l'UE (1301, 1302) ;
identifier (1020), au niveau de l'UE (1301, 1302), les deuxièmes UCI pour un deuxième TRP en communication avec l'UE (1304 1302) ;
déterminer (1030), au niveau de l'UE (1301, 1302), qu'une première ressource de canal de liaison montante physique associée aux premières UCI chevauche dans le temps, dans un créneau, une deuxième ressource de canal de liaison montante physique associée aux deuxièmes UCI dans un groupe de canal de commande de liaison montante physique, PUCCH ;
appliquer (1040) au niveau de l'UE (1301, 1302) une règle de sélection des UCI basées sur la priorité lorsque la première ressource de canal de liaison montante physique chevauche dans le temps dans le créneau la deuxième ressource de canal de liaison montante physique, où la règle de sélection des UCI basées sur la priorité définit que : un retour d'informations de demande de répétition automatique hybride - accusé de réception, HARQ-ACK, a une priorité plus élevée qu'une demande d'ordonnancement, SR, une SR a une priorité plus élevée que les informations d'état de canal, CSI, ayant une priorité plus élevée, et les CSI ayant une priorité plus élevée ont une priorité plus élevée que les CSI ayant une priorité plus faible, où la règle de sélection des UCI basées sur la priorité est appliquée pour produire une communication d'UCI basées sur la priorité d'une ou de plusieurs UCI ; et
coder (1050), au niveau de l'UE (1301, 1302), les une ou plusieurs UCI pour la transmission au gNB sur la base de la communication d'UCI basées sur la priorité, en utilisant une ou plusieurs des ressources parmi la première ressource de canal de liaison montante physique et la deuxième ressource de canal de liaison montante physique ; et
une interface mémoire (1512) configurée pour envoyer à une mémoire les une ou plusieurs UCI.

2. Appareil selon la revendication 1, comprenant en outre un émetteur-récepteur configuré pour transmettre les une ou plusieurs UCI au gNB.

3. Appareil selon l'une quelconque des revendications 1 à 2, dans lequel les un ou plusieurs processeurs sont configurés pour : multiplexer les premières UCI et les deuxièmes UCI pour former la communication d'UCI basées sur la priorité conformément à la règle de sélection des UCI basées sur la priorité.

4. Appareil selon l'une quelconque des revendications 1 à 3, dans lequel les un ou plusieurs processeurs sont configurés pour :
sélectionner l'une des premières ou des deuxièmes UCI sur la base de la règle de sélection des UCI afin de produire les UCI basées sur la priorité ; et
abandonner les UCI restantes sur la base de la règle de sélection des UCI basées sur la priorité.

5. Appareil selon l'une quelconque des revendications 1 à 4, dans lequel les un ou plusieurs processeurs sont configurés pour décoder un index TRP reçu du gNB pour chacune de la première ressource de canal de liaison montante physique et de la deuxième ressource de canal de liaison montante physique, où la règle de sélection des UCI basées sur la priorité définit que, lorsqu'un ordre de priorité des UCI pour différents TRP est le même, les UCI pour un TRP ayant l'index TRP le plus bas sont transmises par l'UE (1301, 1302), et les autres UCI sont abandonnées au niveau de l'UE (1301, 1302).

6. Appareil selon l'une quelconque des revendications 1 à 5, dans lequel la communication d'UCI basées sur la priorité est un rapport d'UCI commun, où un ordre de bits pour le rapport d'UCI commun est les premières UCI pour le premier TRP et les deuxièmes UCI pour le deuxième TRP, où les premières UCI comprennent un ou plusieurs des éléments suivants : une demande de répétition automatique hybride - un accusé de réception, HARQ-ACK, une demande d'ordonnancement, SR, et un rapport d'informations d'état de canal, CSI, pour le premier TRP, et les deuxièmes UCI comprennent un ou plusieurs des éléments suivants : une HARQ-ACK, une SR et un rapport CSI pour le deuxième TRP.

7. Appareil selon l'une quelconque des revendications 1 à 6, dans lequel la communication d'UCI basées sur la priorité est un rapport d'UCI commun, où un ordre de bits pour le rapport d'UCI commun est l'un ou plusieurs des éléments suivants : une demande de répétition automatique hybride - un accusé de réception, HARQ-ACK pour le premier TRP, une HARQ-ACK pour le deuxième TRP, une demande d'ordonnancement, SR, pour le premier TRP, une SR pour le deuxième TRP, un rapport d'informations d'état de canal, CSI, pour le premier TRP, et un rapport CSI pour le deuxième TRP.

8. Appareil selon l'une quelconque des revendications 1 à 7, dans lequel la première ressource de canal de liaison montante physique est associée à un premier index TRP et la deuxième ressource de canal de liaison montante physique est associée à un deuxième index TRP,
où le premier index TRP et le deuxième index TRP sont configurés par les couches supérieures par l'intermédiaire de NR informations système minimales, MSI, NR informations système minimales restantes, RMSI, NR autres informations système, OSI, ou une signalisation de contrôle des ressources radio, RRC, ou indiqués dans un élément de contrôle de contrôle d'accès au support, MAC-CE, ou indiqués de manière dynamique dans des informations de contrôle de liaison descendante, DCI.

9. Appareil selon l'une quelconque des revendications 1 à 8, dans lequel la première ressource de canal de liaison montante physique est associée à un premier index TRP et la deuxième ressource de canal de liaison montante physique est associée à un deuxième index TRP, où le premier index TRP et le deuxième index TRP sont dérivés d'un identificateur temporaire de réseau radio, RNTI, d'un identificateur de cellule physique ou d'un index de cellule de desserte.

10. Au moins un support de stockage lisible par machine comprenant des instructions (1200) y étant intégrées pour coder des informations de commande de liaison montante, UCI, en vue de leur transmission d'un équipement d'utilisateur, UE (1301, 1302), à un noeud de nouvelle génération, gNB, les instructions (1200), lorsqu'elles sont exécutées par un ou plusieurs processeurs, amenant les un ou plusieurs processeurs à exécuter les étapes suivantes :
identifier (1210), au niveau de l'UE fonctionnant dans un système New Radio, NR, qui est configuré pour un fonctionnement à plusieurs points d'émission et de réception, TRP, les premières UCI pour un premier TRP en communication avec l'UE (1301, 1302) ;
identifier (1220), au niveau de l'UE (1301, 1302), les deuxièmes UCI pour un deuxième TRP en communication avec l'UE (1301, 1302) ;
déterminer (1230), au niveau de l'UE (1301, 1302), qu'une première ressource de canal de liaison montante physique associée aux premières UCI chevauche dans le temps, dans un créneau, une deuxième ressource de canal de liaison montante physique associée aux deuxièmes UCI ;
appliquer (1240), au niveau de l'UE (1301, 1302), une règle de sélection des UCI basées sur la priorité lorsque la première ressource de canal de liaison montante physique chevauche dans le temps dans le créneau avec la deuxième ressource de canal de liaison montante physique,
où la règle de sélection des UCI basées sur la priorité définit que : un retour d'informations de demande de répétition automatique hybride - accusé de réception, HARQ-ACK, a une priorité plus élevée qu'une demande d'ordonnancement, SR, une SR a une priorité plus élevée que les informations d'état de canal, CSI, ayant une priorité plus élevée, et les CSI ayant une priorité plus élevée ont une priorité plus élevée que les CSI ayant une priorité plus faible, où la règle de sélection des UCI basées sur la priorité est appliquée pour produire une communication d'UCI basées sur la priorité d'une ou de plusieurs UCI ; et
coder (1250), au niveau de l'UE (1301, 1302), les une ou plusieurs UCI pour la transmission au gNB sur la base de la communication d'UCI basées sur la priorité, en utilisant une ou plusieurs des ressources parmi la première ressource de canal de liaison montante physique et la deuxième ressource de canal de liaison montante physique.

11. Au moins un support de stockage lisible par machine selon la revendication 10, comprenant en outre des instructions (1200) qui, lorsqu'elles sont exécutées par les un ou plusieurs processeurs, amènent les un ou plusieurs processeurs à exécuter l'étape suivante :
multiplexer les premières UCI et les deuxièmes UCI pour former la communication d'UCI basées sur la priorité conformément à la règle de sélection des UCI basées sur la priorité.

12. Au moins un support de stockage lisible par machine selon l'une quelconque des revendications 10 à 11, comprenant en outre des instructions (1200) qui, lorsqu'elles sont exécutées par les un ou plusieurs processeurs, amènent les un ou plusieurs processeurs à exécuter les étapes suivantes :
sélectionner l'une des premières ou des deuxièmes UCI sur la base de la règle de sélection des UCI afin de produire les UCI basées sur la priorité ; et
abandonner les UCI restantes sur la base de la règle de sélection des UCI basées sur la priorité.

13. Au moins un support de stockage lisible par machine selon l'une quelconque des revendications 10 à 12, comprenant en outre des instructions (1200) qui, lorsqu'elles sont exécutées par les un ou plusieurs processeurs, amènent les un ou plusieurs processeurs à exécuter l'étape suivante :
décoder un index TRP reçu du gNB pour chacune de la première ressource de canal de liaison montante physique et de la deuxième ressource de canal de liaison montante physique, où la règle de sélection des UCI basées sur la priorité définit que, lorsqu'un ordre de priorité des UCI pour différents TRP est le même, les UCI pour un TRP ayant l'index TRP le plus bas sont transmises par l'UE (1301, 1302), et les autres UCI sont abandonnées au niveau de l'UE (1301, 1302).
